# EUROPÄISCHE PATENTSCHRIFT

(11) **EP 0 428 895 B1**
(45) Veröffentlichungstag und Bekanntmachung des Hinweises auf die Patenterteilung: **30.03.1994**
(21) Anmeldenummer: 90120397.6
(22) Anmeldetag: 24.10.1990
(51) Int. Cl.: F16H 57/02, B41F 31/04

(54) **Stellantrieb**
Actuator
Dispositif d'entraînement

(30) Priorität: 17.11.1989 DE 8913588 U
(43) Veröffentlichungstag der Anmeldung: 29.05.1991
(73) Patentinhaber: Heidelberger Druckmaschinen Aktiengesellschaft, D-69019 Heidelberg (DE)
(72) Erfinder: Blaser, Peter-Theobald, W-6912 Dielheim (DE); Hofheinz, Walter, W-6900 Heidelberg (DE)
(74) Vertreter: Stoltenberg, Heinz-Herbert Baldo

(56) Entgegenhaltungen:
- DE-A- 3 049 289
- DE-A- 3 744 155
- FR-A- 1 448 923
- GB-A- 1 284 540
- US-A- 3 590 653
- US-A- 3 747 524
- US-A- 4 669 578

## Beschreibung

Die Erfindung betrifft einen in einem Gehäuse aufgenommenen Stellantrieb, insbesondere für eine Druckmaschine, mit einem elektrischen Antriebsmotor, der über eine Untersetzung mit einer Stellwelle und über ein Getriebe mit einem Stellungsmelder verbunden ist.

In vielen Bereichen der Technik sind Stellaufgaben zu bewerkstelligen. Vorzugsweise erfolgt die Stellfunktion ferngesteuert. Dabei kann die Position des Stellgliedes mittels eines Stellungsmelders überwacht werden.

In der Druckmaschinentechnik werden für unterschiedliche Aufgaben Stellantriebe benötigt. Beispielsweise ist es für eine Saugkopfpositionierung einer Bogenmaschine zur Anpassung an das gewünschte Druckformat möglich, Stellantriebe einzusetzten, wobei eine Lagerückmeldung für eine Steuerelektronik vorteilhaft ist. Die vielseitigen Stellaufgaben in der Drucktechnik und der dort technisch bedingte, gedrängte Aufbau einer Druckmaschine lassen den Einsatz bekannter Stellantriebe nicht uneingeschränkt zu.

Aus der DE-A-3049289 ist ein Stellantrieb der eingangs genannten Art bekannt. Bei diesem Stellantrieb ist das übersetzungsverhältnis fest vorgegeben und er läßt sich daher nicht auf einfache Weise für vielseitige Stellaufgaben umgestalten. Da die elektrischen Einrichtungen, Motor und Stellungsmelder gemeinsam mit Untersetzung und Getriebe in einem Gehäuse untergebracht sind, besteht die Gefahr der Verschmutzung derselben mit Schmiermittel, was zu einer Funktionsbeeinträchtigung führen kann.

Aus der GB-A-1 284 540 ist ein Getriebe bekannt, das zwischen einer Stellwelle eines Stellgliedes und einem Stellungsmelder angeordnet ist, wobei das Getriebe jeweils zwei parallel zueinander verlaufende Lagerachsen aufweist, auf die jeweils aus einem Ritzel und einem mit diesem drehfest verbundenen Stirnrad bestehende Untersetzungsräder derart zur Vorgabe ihrer Anzahl und/oder ihres Durchmessers auswechselbar aufgesteckt sind, daß Ritzel und Stirnrad von auf unterschiedlichen Lagerachsen angeordneten Untersetzungsräder miteinander kämmen.

Der Erfindung liegt die Aufgabe zugrunde, einen Stellantrieb der eingangs genannten Art mit einem Getriebe der oben genannten Art derart auszustatten, daß mit geringem Montageaufwand eine Anpassung an den jeweils erforderlichen Stellbereich erfolgen kann, eine schlanke Bauform erzielt ist und eine Verschmutzung der elektrischen Einrichtungen, Motor und Stellungsmelder, durch Schmiermittel ausgeschlossen ist.

Die Aufgabe wird bei einem Stellantrieb der eingangs genannten Art dadurch gelöst, daß die Untersetzung und/oder das Getriebe jeweils zwei parallel zueinander verlaufende Lagerachsen aufweisen, auf die jeweils aus einem Ritzel und einem mit diesem drehfest verbundenen Stirnrad bestehende Untersetzungsräder derart zur Vorgabe ihrer Anzahl und/oder ihres Durchmessers auswechselbar aufgesteckt sind, daß ein Ritzel eines Untersetzungsrads der einen Lagerachse in ein Stirnrad eines Untersetzungsrads der anderen Lagerachse greift, dessen zugeordnetes Ritzel wiederum mit einem Stirnrad eines weiteren Untersetzungsrads kämmt, daß die Kopfwandung des Gehäuses eine Lagerung für die Stellwelle aufweist, wobei ein auf dem innerhalb des Gehäuses gelegenen Stellwellenende befestigtes Zahnrad bei der Montage der Kopfwandung direkt in Eingriff mit einem entsprechenden Ritzel eines Untersetzungsrades gelangt, daß die Lagerachsen mit ihren einen Enden in Bohrungen einer Kopfwandung und mit ihren anderen Enden in Bohrungen einer Zwischenwand des Gehäuses eingreifen, daß die Zwischenwand das Gehäuse in zwei Räume unterteilt und daß der eine, erste Raum den Antriebsmotor und den Stellungsmelder und der andere, zweite Raum die Untersetzung und das Getriebe aufnimmt.

Durch Wahl der für die jeweilige Stellaufgabe geeigneten Untersetzungsräder läßt sich auf einfache weise das Untersetzungsverhältnis sowohl der Untersetzung als auch des Getriebes einstellen. Hierzu ist es lediglich erforderlich , auf die der Untersetzung bzw. dem Getriebe angehörenden, parallel zueinander verlaufenden Lagerachsen die in ihrer Anzahl und/oder in ihrem Durchmesser wählbaren Untersetzungsräder aufzustecken. Eine größere Anzahl von Untersetzungsrädern führt zu einer größeren Untersetzung. Zusätzlich oder alternativ läßt sich das Untersetzungsverhältnis jedoch auch wie gesagt- über die Durchmesser der Untersetzungsräder variieren, wobei die Durchmesser von Ritzel und Stirnrad derart aufeinander abgestimmt sind, daß ein Zahneingriff besteht. Folgt man dem Kraftabtriebsweg vom Motor zur Stellwelle bzw. zum Stellungsmelder, so greift stets ein Ritzel eines Untersetzungsrads der einen Lagerachse in ein Stirnrad eines Untersetzungsrads der anderen Lagerachse, dessen zugeordnetes Ritzel wiederum mit einem Stirnrad eines weiteren Untersetzungsrades kämmt, das auf die erstgenannte Lagerachse aufgesteckt ist. Die Motorkraft wird vorzugsweise von einem auf einem Abtriebswellenende des Antriebsmotors angeordneten Ritzel auf ein Stirnrad der Untersetzungsräder übertragen. Die Stellwelle wird von einem Ritzel des als letztes in der Untersetzungskette angeordneten Untersetzungsrads angetrieben, indem dieses mit einem drehfest mit der Stellwelle verbundenen Zahnrad kämmt, wobei die Stellwelle an der Kopfwandung gelagert ist. Mithin wird die Stellwelle von der Kopfwandung des Gehäuses getragen, so daß ein auf dem innerhalb des Gehäuses gelegenen Stellwellenende befestigtes Zahnrad bei der Montage der Kopfwand direkt in Eingriff mit einem entsprechenden Ritzel eines Untersetzungsrades gelangt. Koaxial zum Zahnrad kann ein weiteres, im Durchmesser kleineres Zahnrad vorgesehen sein, das mit einem der zum Stellungsmelder führenden Untersetzungsräder kämmt.

Die Lagerachsen greifen mit ihren einen Enden in Bohrungen einer Kopfwandung und mit ihren anderen Enden in Bohrungen einer Zwischenwand eines den Stellantrieb aufnehmenden Gehäuses ein. Hierdurch sind die Lagerachsen nicht nur auf einfache Weise gehalten, sondern auch zumindest einendig bei noch nicht aufgesetzter oder entfernter Kopfwandung für ein Aufstecken oder Abziehen der Untersetzungsräder zugänglich.

Die Zwischenwand übernimmt eine Doppelfunktion, da sie nicht nur die Enden der Lagerachsen aufnimmt, sondern das Gehäuse in zwei Räume teilt, wobei der erste Raum den Antriebsmotor und den Stellungsmelder und der zweite Raum die Untersetzung und das Getriebe aufnimmt. Diese Maßnahme stellt sicher, daß kein Schmiermittel die elektrischen Einrichtungen von Antriebsmotor und Stellungsmelder verschmutzt. Die Zwischenwand wird lediglich von dem Antriebswellenende des Antriebsmotors und einem Stellorgan des Stellungsmelders durchsetzt.

Durch die erfindungsgemäßen Maßnahmen ist ein Baukastensystem realisiert, bei dem -bis auf die Untersetzungsräder- für unterschiedliche Stellaufgaben stets die gleiche Baueinheit eingesetzt werden kann. Um eine Anpassung an eine individuelle Stellaufgabe vorzunehmen, sind lediglich geeignete Untersetzungsradpaare auf die Lagerachsen aufzustecken. Der Gebrauchszweck eines erfindungsgemäßen Stellantriebs ist damit entscheidend erhöht, da er mit wenigen Handgriffen seinem Einsatzgebiet auf einfache Weise anpaßbar ist. Entsprechend klein kann die Lagerhaltung ausfallen. Durch die Wahl der untersetzungsradpaare läßt sich sowohl der Stellweg als auch die Stellkraft einstellen und gleichzeitig auch die Auflösung des Stellungsmelders variieren bzw. eine Anpassung des Meldewegs an den zum Einsatz kommenden Stellungsmelder vornehmen.

Die Zwischenwand kann desweiteren als Montagewand für den Antriebsmotor und den Stellungsmelder dienen.

Eine weitere erfindungsgemäße Lösung der Aufgabe bei einem Stellantrieb der eingangs genannten Art besteht darin, daß die Untersetzung und/oder das Getriebe jeweils zwei parallel zueinander verlaufende Lagerachsen aufweisen, auf die jeweils aus einem Ritzel und einem mit diesem drehfest verbundenen Stirnrad bestehende Untersetzungsräder derart zur Vorgabe ihrer Anzahl und/oder ihres Durchmessers auswechselbar aufgesteckt sind, daß ein Ritzel eines Untersetzungsrads der einen Lagerachse in ein Stirnrad eines Untersetzungsrads der anderen Lagerachse greift, dessen zugeordnetes Ritzel wiederum mit einem Stirnrad eines weiteren Untersetzungsrades kämmt, daß die Kopwandung des Gehäuses eine Lagerung für die Stellwelle aufweist, wobei ein auf dem innerhalb des Gehäuses gelegenen Stellwellenende befestigtes Zahnrad bei der Montage der Kopfwandung direkt in Eingriff mit einem entsprechenden Ritzel eines Untersetzungsrades gelangt, und daß der Antriebsmotor an seinen beiden Stirnseiten zwei zueinander entgegengesetzt verlaufende Abtriebswellenenden aufweist, von denen das eine zu der in einem ersten Gehäuse-Innenraumbereich vor der einen Stirnseite gelegenen Untersetzung führt und das andere über das Getriebe mit einem Stellungsmelder gekuppelt ist, wobei das Getriebe in einem und der Stellungsmelder in einem weiteren Gehäuse-Innenraumbereich vor der anderen Stirnseite des Antriebsmotors angeordnet sind.

Diese Ausgestaltung führt zu einer extrem schlanken Bauform, deren Durchmesser im wesentlichen von den Abmessungen des Antriebsmotors bestimmt wird, da die übrigen Komponenten beidseitig der Stirnseiten des Antriebsmotors innerhalb eines entsprechend ausgebildeten Gehäuses untergebracht sind. Es wird daher ein Antriebsmotor eingesetzt, der zwei zueinander entgegengesetzt verlaufende Abtriebswellenenden an seinen beiden Stirnseiten aufweist, so daß mit dem einen Abtriebswellenende die Stellaufgabe und mit dem anderen Abtriebswellenende die Stellungsmeldeaufgabe gelöst werden kann. Mithin liegen voneinander unabhängige Stellkraft- und Stellungsmeldeeinheiten vor. Diese Reihenbauweise (Stellkrafteinheit/Antriebsmotor/Stellungsmeldeeinheit) führt neben der schlanken Bauform ferner zu der Möglichkeit einer unabhängigen Positionierung/Kalibrierung von Stellkraft- und Stellungsmeldezweig, denn eine bei Kalibrierungsarbeiten vorgenommene Entkupplung des einen Zweiges führt nicht zu einer Entkupplung des anderen Zweiges und eine Änderung der Untersetzung des einen Zweiges wirkt sich nicht auf das Untersetzungsverhältnis des anderen Zweiges aus. Unabhängig voneinander lassen sich somit -je nach Stellaufgabeindividuell die beiden Zweige einstellen bzw. auslegen.

Die bei der ersten Ausführungsform erzielten Vorteile werden auch bei dieser Ausführungsform erzielt, der Unterschied liegt lediglich in der schlankeren Bauform durch die Reihenbauweise.

Ein Kompaktgerät kleinster Bauweise ergibt sich, wenn das Gehäuse hohlzylindrisch ausgebildet ist und an einer Kopffläche die Stellwelle aufweist. Das hohlzylindrische Gehäuse hat vorzugsweise einen kreisförmigen Querschnitt, so daß seine Form der funktionsbedingten Form gewisser Bauelemente einer Druckmaschine, wie Walzen und Zylinder, in etwa angepaßt ist. Insofern läßt sich der erfindungsgemäße Stellantrieb auch z. B. in Zwickelbereichen der Druckmaschinenwalzen platzsparend unterbringen.

Bei beiden Ausführungsformen kann der Stellungsmelder als Potentiometer, insbesondere als Zehngang-Potentiometer, ausgebildet sein. Ein derartiger Stellungsmelder ist preisgünstig und stellt einen Absolutwertspeicher dar, dessen Information auch bei einem Ausfall der Spannungsversorgung oder dergleichen erhalten bleibt. Die Zehngang-Version garantiert eine hohe Auflösung des Positionsmeldebereichs.

Zweckmäßigerweise wird zum Schutz von überlastungen und auch zur Erleichterung von Abgleicharbeiten zwischen das Getriebe und den Stellungsmelder eine Rutschkupplung geschaltet. Das Auslösemoment der Rutschkupplung liegt weit unter dem Moment, das eine Beschädigung des Stellungsmelders, z. B. eine Zerstörung des Anschlags des Potentiometers, herbeiführen würde, so daß eine gegen den Anschlag erfolgende Einstellung zu keinen nachteiligen Folgen führt. Es ist sogar möglich, hierdurch eine selbsttätige Justierung des Stellungsmelders vorzunehmen.

Bei der zweiten Ausführugnsform ist die Rutschkupplung vorzugsweise -ebenso wie das Getriebe- in dem zweiten Raum bzw. dem zweiten Gehäuse-Innenraumbereich angeordnet. Für eine besonders schlanke Bauform können Getriebe, Rutschkupplung und Potentiometer reihenförmig hintereinander angeordnet sein.

Für eine hohe Funktionssicherheit sind den Antriebsmotor und/oder den Stellungsmelder und/oder die Rutschkupplung von der Untersetzung und/oder dem Getriebe abteilende Trennwände vorgesehen. Antriebsmotor, Rutschkupplung und Potentiometer sind demgemäß keinem Getriebeschmiermittel ausgesetzt.

Die Zeichnungen veranschaulichen die Erfindung anhand eines Ausführungsbeispiels und zwar zeigt:
Figur 1 eine schematische Darstellung eines Stellantriebs,
Figur 2 einen Längschnitt durch ein Ausführungsbeispiel des Stellantriebs,
Figur 3 einen Querschnitt durch das Ausführungsbeispiel der Figur 2,
Figur 4 einen Längsschnitt durch ein zweites Ausführungsbeispiel eines Stellantriebs,
Figur 5 einen Querschnitt durch das Ausführungsbeispiel der Figur 4,
Figur 6 eine schematische Darstellung eines Stellantriebs eines weiteren Ausführungsbeispiels,
Figur 7 eine Seitenansicht des Stellantriebs der Figur 6 ,
Figur 8 eine Stirnansicht in Richtung des Pfeiles x gemäß Figur 7 und
Figur 9 eine weitere Stirnansicht in Richtung des Pfeiles y in Figur 7.

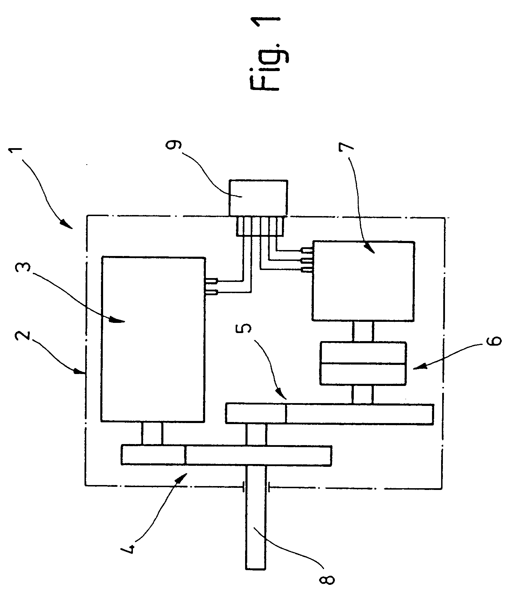

Die Figur 1 zeigt schematisch einen Stellantrieb 1, der in einem Gehäuse 2 einen elektrischen Antriebsmotor 3, eine Untersetzung 4, ein Getriebe 5, eine Rutschkupplung 6 und einen Stellungsmelder 7 aufweist. Das Gehäuse 2 wird von einer Stellwelle 8 durchsetzt und es weist einen elektrischen Steckanschluß 9 auf.

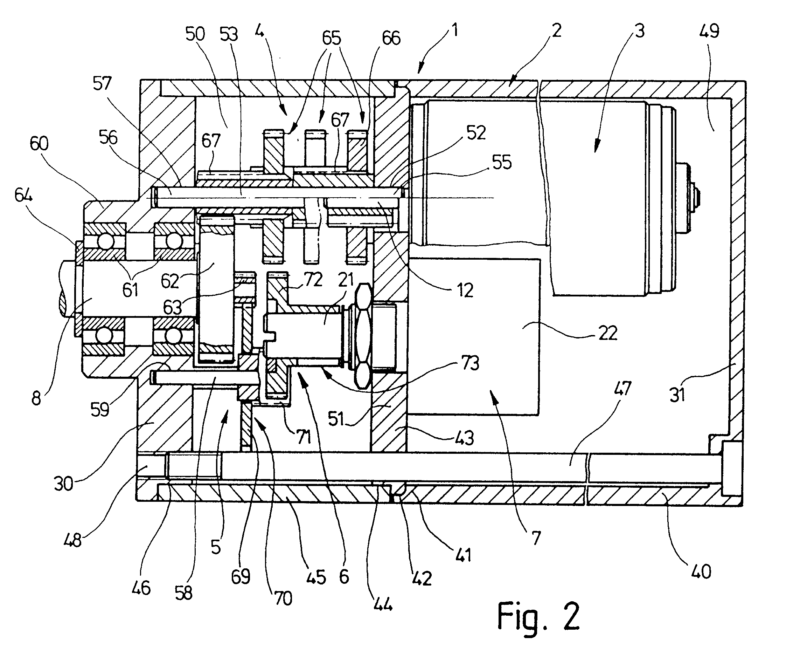

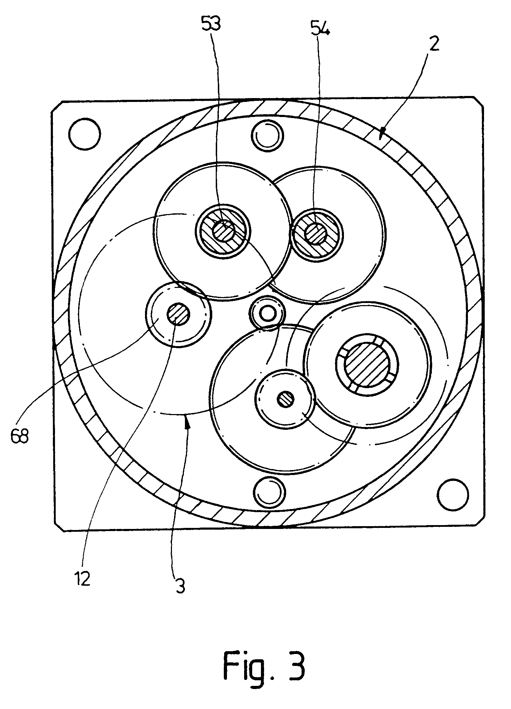

Das Gehäuse 2 besteht gemäß Figur 2 aus einem becherförmigen Abschnitt 40, der an seinem Becherrand 41 eine innere Ringstufe 42 aufweist, in die eine Zwischenwand 43 eingelegt ist. Die Zwischenwand 43 weist ebenfalls eine Ringstufe 44 auf, in die ein zylindrischer Abschnitt 45 des Gehäuses 2 eingreift. Eine mit Ringstufe 46 versehene Kopfwandung 30 verschließt das Gehäuse 2 stirnseitig. Von einer dieser Stirnseite gegenüberliegenden Kopfwandung 31 des becherförmigen Abschnitts 40 gehen Gewindebolzen 47 aus, die in Gewindebohrungen 48 der Kopfwandung 30 eingeschraubt sind und hierdurch das Gehäuse 2 axial zusammenspannen, wodurch die Zwischenwand 43, der zylindrische Abschnitt 45 und die Kopfwandung 30 zusammen mit dem becherförmigen Abschnitt 40 eine starre Einheit bilden. Gemäß Figur 3 ist das Gehäuse 2 im Querschnitt kreisförmig ausgebildet.

Die Zwischenwand 43 unterteilt das Gehäuse 2 in einen ersten Raum 49, der den Antriebsmotor 3 und den Stellungsmelder 7 aufnimmt, sowie in einen zweiten Raum 50, in dem die Untersetzung 4, das Getriebe 5 sowie die Rutschkupplung 6 untergebracht sind. Die Zwischenwand 43 bildet eine Montagewand 51 für den Antriebsmotor 3 und den Stellungsmelder 7; sie wird lediglich von einem Abtriebswellenende 12 des Antriebsmotors 3 und einer Welle 21 des Stellungsmelders 7 durchgriffen.

Die Zwischenwand 43 weist Bohrungen 52 auf, in die zwei parallel zueinander verlaufende Lagerachsen 53 und 54 der Untersetzung 4 mit ihren Enden 55 eingesteckt sind. Die anderen Enden 56 der Lagerachsen 53 und 54 greifen in Bohrungen 57 der Kopfwandung 30 ein. Die Bohrungen in 57 sind -ebenso wie die Bohrung 52- vorzugsweise als Sacklöcher ausgebildet. Ferner weist die Zwischenwand 43 eine weitere, aus der Figur 2 nicht ersichtliche Bohrung für die Aufnahme des Endbereichs einer Lagerachse 58 des Getriebes 5 auf, wobei der andere Endbereich der Lagerachse 58 in eine Bohrung 59 der Kopfwandung 30 eingreift. Die Bohrung 59 ist ebenfalls als Sackloch ausgebildet.

Die Kopfwandung 30 weist einen axialen Lagerflansch 60 auf, der zwei voneinander beabstandete Kugellager 61 für die Stellwelle 8 tragt. Letztere ist drehfest mit einem Zahnrad 62 sowie einem weiteren, koaxialen, durchmesserkleineren Zahnrad 63 verbunden. Ein Spannring 64 sichert die axiale Lage der Stellwelle 8. Die Lagerachsen 53, 54 und 58 sowie das Abtriebswellenende 12, die Stellwelle 8 und die Welle 21 des Stellungsmelders 7 laufen parallel zueinander.

Auf die Lagerachsen 53 und 54 sind Untersetzungsräder 65 aufsteckbar. Jedes Untersetzungsrad 65 besteht aus einem Stirnrad 66 und einem drehfest mit diesem verbundenen, durchmesserkleineren Ritzel 67. Die Anordnung ist nun derart ausgebildet, daß die Untersetzungsräder 65 so versetzt auf die Lagerachsen 53 und 54 aufgeschoben sind, daß das Stirnrad 66 des eng benachbart zur Zwischenwand 43 liegenden Untersetzungsrads 65 mit dem auf dem Abtriebswellenende 12 des Antriebsmotors 3 befestigten Ritzel 68 kämmt. Das zugehörige Ritzel 67 des erwähnten Untersetzungsrads 65 arbeitet mit einem Stirnrad 66 eines auf der anderen Lagerachse aufgesteckten Untersetzungsrads 65 zusammen. Dessen Ritzel 67 kämmt wiederum mit einem Stirnrad 66 eines Untersetzungsrads 65, das auf der parallelen, bereits zuvor erwähnten Lagerachse angeordnet ist usw. Es wird deutlich, daß das Untersetzungsverhältnis von der Anzahl der Untersetzungsräder 65 sowie von deren Durchmessern bestimmt wird. Ritzel-und Stirnraddurchmesser sind dabei stets derart aufeinander abgestimmt, daß diese Räder unter Berücksichtigung des festen, parallelen Abstandes der beiden Lagerachsen 53 und 54 miteinander kämmen. Das benachbart zur Kopfwandung 30 liegende Untersetzungsrad 65 kämmt mit seinem Ritzel 67 mit dem Zahnrad 62 der Stellwelle 8. Das zum Zahnrad 62 koaxiale Zahnrad 63 der Stellwelle 8 wirkt mit einem Stirnrad 69 eines weiteren Untersetzungsrads 70 zusammen, das auf die Lagerachse 58 aufgesteckt ist. Ein zum Untersetzungsrad 70 zugehörendes Ritzel 71 wirkt mit einem Zahnrad 72 einer Klemmhülse 73 zusammen, die auf die Welle 21 des Stellungsmelders 7 reibschlüssig aufgeschoben ist, wodurch die Rutschkupplung 6. gebildet wird. Die Klemmhülse 73 ist als Spannzange ausgebildet, so daß die Spannkraft der federnden Zangenarme das Rutschmoment bestimmt.

Im Stellbetrieb treibt der Antriebsmotor 3 mit seinem Ritzel 68 die Untersetzungsradpaare (Untersetzungsräder 65) der Lagerachsen 53 und 54 an, die die Motorkraft auf das Zahnrad 62 der Stellwelle 8 übertragen. Das Zahnrad 63 führt zusammen mit dem auf die Lagerachse 58 aufgesteckten Untersetzungsrad 70 zu einer weiteren Drehzahlherabsetzung, die über das Ritzel 71 und die Rutschkupplung 6 auf den Stellungsmelder 7 übertragen wird. Letzterer ist vorzugsweise als Zehngang-Potentiometer 22 ausgebildet. Der an den Anschlüssen des Zehngang-Potentiometers 22 eingestellte Widerstandswert stellt ein Maß für die Winkelposition der Stellwelle 8 dar.

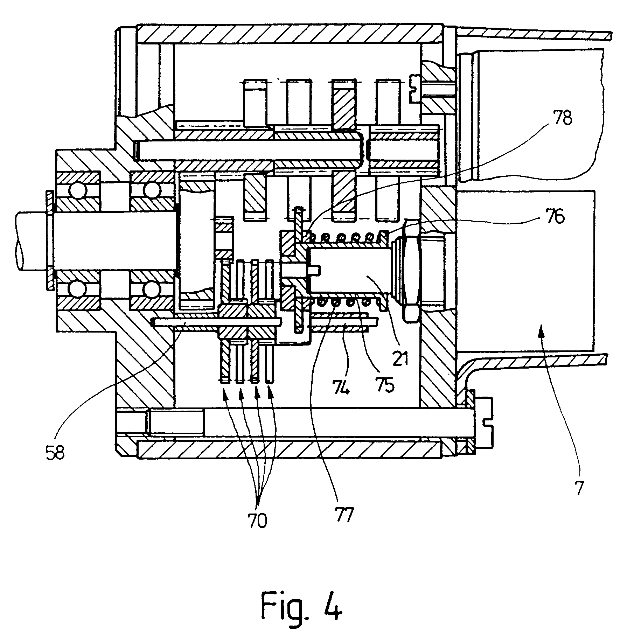

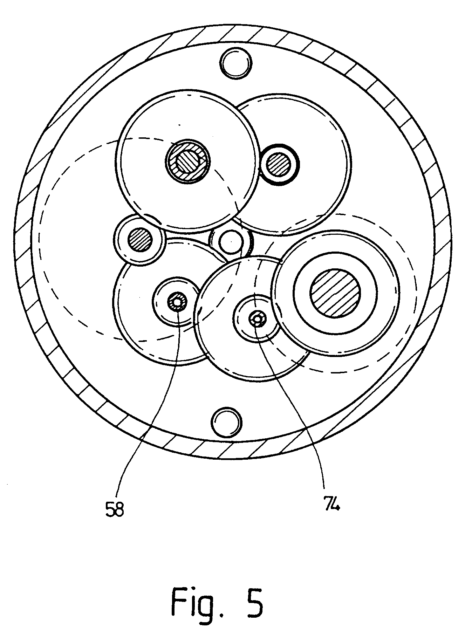

Die Figuren 4 und 5 zeigen ein anderes Ausführungsbeispiel eines erfindungsgemäßen Stellantriebs 1, bei dem gleiche Teile mit gleichen Bezugsziffern versehen sind. Gegenüber dem zuvor beschriebenen Ausführungsbeispiel weist das Getriebe 5 zusätzlich zur Lagerachse 58 eine weitere, hierzu parallel liegende Lagerachse 74 auf, wobei -ebenso wie vorstehend bei der Untersetzung 4 beschrieben- auf diese sowie auf die Lagerachse 58 mehrere, mit Stirnrad 69 sowie Ritzel 71 versehene Untersetzungsräder 70 austauschbar aufgeschoben sind. Ferner ist die Rutschkupplung 6 mittels einer drehfest auf die Welle 21 des Stellungsmelders 7 aufgepreßte Hülse 75 realisiert, die einen Ringkragen 76 aufweist, an den sich das eine Ende einer Schraubendruckfeder 77 abstützt. Das andere Ende der Schraubendruckfeder 77 liegt an einen drehbar auf der Hülse 75 gelagerten Mitnehmer 78 an, der von dem in der Getriebekette letzten Untersetzungsrad 70 mitgenommen wird. Die Federkraft bestimmt das übertragungsmoment der Rutschkupplung 6.

Die Ausführungsbeispiele der Figuren 2 bis 5 zeigen, daß das Untersetzungsverhältnis für die Stellwelle 8 und den Stellungsmelder 7 durch Aufstecken geeigneter Untersetzungsräder 65 bzw. 70 auf die Lagerachsen 53, 54 sowie 58 und 74 einstellbar ist. Bei nicht montierter Kopfwandung 30 sind die Lagerachsen 53, 54 sowie 58 und 74 einseitig zugänglich, so daß eine einfache Handhabung der Untersetzungsräder 65 sowie 70 gewährleistet ist. Bei der Montage der Kopfwandung 30 wird ferner der Kraftschluß zur Stellwelle 8 hergestellt.

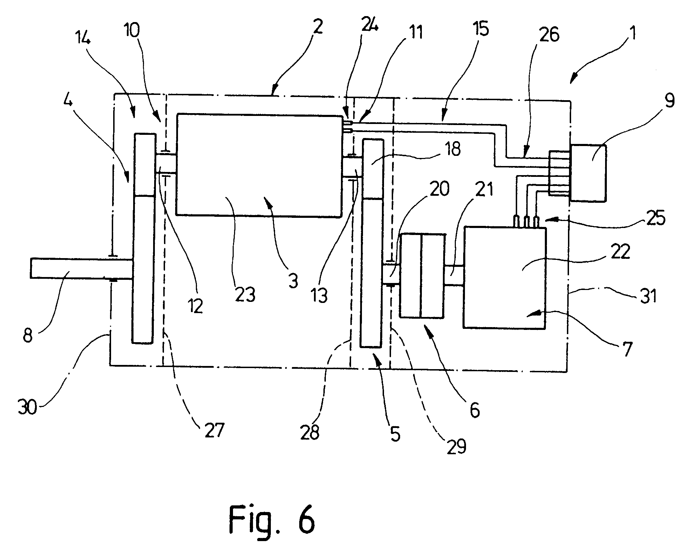

Der Antriebsmotor 3 ist gemäß Figur 6, die ein weiteres Ausführungsbeispiel in schematischer Darstellung zeigt, an seinen beiden Stirnseiten 10 und 11 jeweils mit einem Abtriebswellenende 12 bzw. 13 versehen. Die Abtriebswellen 12 und 13 verlaufen in zueinander entgegengesetzte Richtungen. Die Untersetzung 4 befindet sich in einem ersten Gehäuse-Innenraumbereich 14, der vor der Stirnseite 10 des Antriebsmotors 3 liegt. Vor der Stirnseite 11 des Antriebsmotors 3 liegen weitere Gehäuse-Innenraumbereiche, die das Getriebe 5, die Rutschkupplung 6 und den Stellungsmelder 7 aufnehmen. Diese Reihenförmige Anordnung führt zu einer extrem schlanken Bauweise des Stellantriebs 1.

Das Abtriebswellenende 12 ist mit der Stellwelle 8 über die Untersetzung 4 gekoppelt, die wie im Ausführungsbeispiel der Figur 1 ausgebildet ist. Auf dem Abtriebswellenende 13 des Antriebsmotors 3 ist ebenfalls ein Ritzel 18 angeordnet, das mit einem Getriebe 5 zusammenwirkt. Das Getriebe 5 hat einen Aufbau wie im Ausführungsbeispiel der Figur 4 beschrieben. Es führt zu der Rutschkupplung 6, die über eine Welle 21 mit dem Stellungsmelder 7 verbunden ist. Der Stellungsmelder 7 ist ebenfalls als Zehngang-Potentiometer 22 ausgebildet.

In allen Ausführungsbeispielen kommt als Antriebsmotor 3 ein eisenloser Käfigmotor 23 zum Einsatz, der als Gleichstrommotor ausgebildet ist. Er weist elektrische Anschlüsse 24 auf. Das Zehngang-Potentiometer 22 ist mit Anschlüssen 25 versehen. Die Anschlüsse 24 und 25 sind über Leitungen 26 mit dem elektrischen Steckanschluß 9 verbunden. Mithin besteht eine gemeinsame elektrische Steckverbindung sowohl für den Antriebsmotor 3 als auch für das Zehngang-Potentiometer 22.

Als Schutz vor dem Schmiermittel der Untersetzung 4 bzw. des Getriebes 5 sind im Ausführungsbeispiel der Figur 6 einsetzbare Trennwände 27, 28 und 29 vorgesehen. Die Trennwand 27 verläuft parallel zur Kopfwandung 30 des Gehäuses 2, wobei zwischen Kopfwandung 30 und Trennwand 27 die Untersetzung 4 angeordnet ist. Die Trennwände 28 und 29 verlaufen parallel zur gegenüberliegenden Kopfwandung 31 des Gehäuses 2, wobei sie zwischen sich das Getriebe 5 aufnehmen. Bei dem dargestellten Ausführungsbeispiel wird die Kopfwandung 30 von der Stellwelle 8 und die Kopfwandung 31 von dem elektrischen Steckanschluß 9 durchsetzt. Der Steckanschluß 9 weist nicht dargestellte Arretiermittel für einen aufzusteckenden Gegenstecker auf.

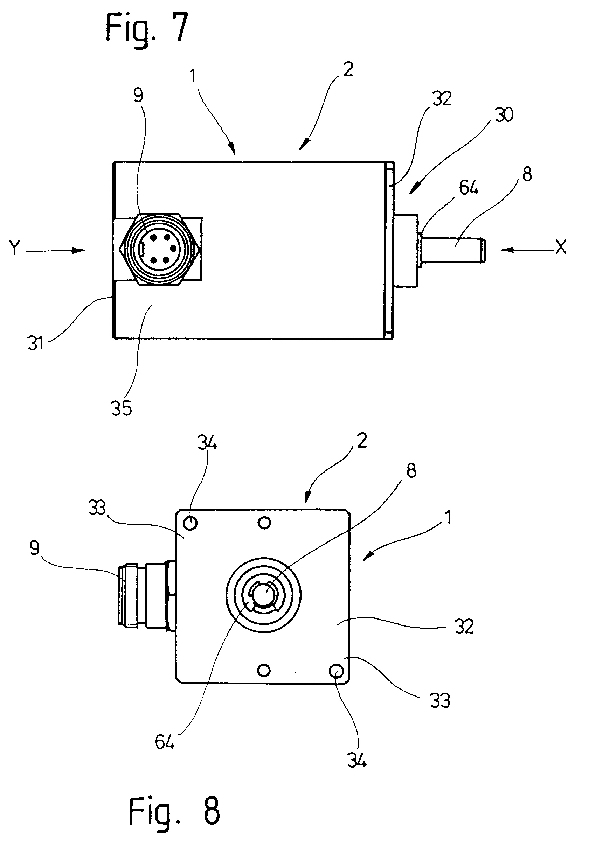

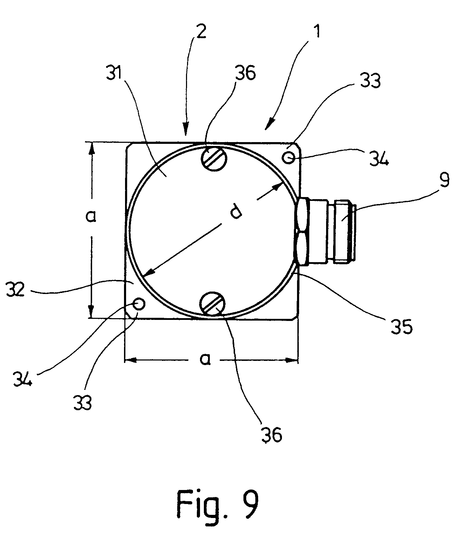

Aus den Figuren 7 bis 9 ist insbesondere der Gehäuseaufbau des Stellantriebs 1 ersichtlich. Das Gehäuse 2 des Stellantriebs 1 ist hohlzylindrisch ausgebildet, wobei an einer Kopffläche, nämlich der Kopfwandung 30, die Stellwelle 8 zentral austritt. Das hohlzylindrische Gehäuse 2 weist einen kreisförmigen Querschnitt auf. Auf der Kopfwandung 30 ist ein Befestigungsflansch 32 angeordnet, der einen quadratischen Grundriß besitzt. Die Seitenlänge a des quadratischen Befestigungsflansches 32 ist ebensogroß wie der Durchmesser d des Gehäuses 2. Für die Montage des Stellantriebs 1 sind zumindest in zwei einander gegenüberliegenden Eckbereichen 33 des Befestigungsflansches 32 Durchgangslöcher 34 vorgesehen. Im Gegensatz zum in der Figur 6 schematisch dargestellten Ausführungsbeispiel befindet sich der elektrische Steckanschluß 9 nicht an der Kopfwandung 31 sondern der Mantelwandung 35 des Gehäuses 2.

Die Kopfwandung 31 ist für die Bestückung/Montage abnehmbar; sie wird mittels Gewindeschrauben 36 gehalten.

Der erfindungsgemäße Stellantrieb 1 bildet eine kompakte, servicefreundliche Einheit, die aufgrund ihrer Reihenbauweise (Figur 6) eine extrem schlanke Bauform besitzt. Da bei sämtlichen Ausführungsbeispielen die Untersetzung 4 und das Getriebe 5 als austauschbare Baueinheiten mit jeweils wählbaren Untersetzungsverhältnissen ausgebildet sind, läßt sich bei der Montage auf einfache Weise ein Stellantrieb 1 erstellen, der auf die jeweilige Stellaufgabe zugeschnitten ist. Es liegt eine Kompletteinheit vor, da eine Positionsrückmeldung (Zehngang-Potentiometer 22) integriert ist. Die Potentiometer-Lösung führt zu einer absoluten Speicherung der jeweils vorliegenden Stellposition, die auch bei einem Spannungsausfall oder dergleichen erhalten bleibt. Die Rutschkupplung 6 schützt einerseits das Zehngang-Potentiometer 22 vor Überlastung und bietet andererseits eine Justierhilfe. Bei der Kalibrierung kann der Stellantrieb -unabhängig von der Stellung des Potentiometers- ohne weiteres auch nach Einnahme der Anschlagstellung des Potentiometers betätigt werden, um z.B. den Anfang des Stellbereichs anzufahren. Die Rutschkupplung verhindert eine Zerstörung. Ist die Mechanik auf den Anfang des Stellbereichs justiert, so läßt sich der gewünschte Stellbereich abfahren, wobei sicherzustellen ist, daß der Verstellbereich des Zehngang-Potentiometers 22 nicht überschritten wird. Sollte letzteres der Fall sein, so ist ein anderes Untersetzungsverhältnis durch Austauschen der entsprechenden Baueinheit einzustellen. Der Stellantrieb kann beispielsweise zur Positionierung eines Saugkopfes einer Bogendruckmaschine eingesetzt werden, wobei die Saugkopfposition mittels des Stellantriebs 1 auf das Papierformat ferngesteuert einstellbar ist.

Der gemeinsame elektrische Steckanschluß 9 bietet eine besonders einfache Anschlußmöglichkeit für den Antriebsmotor 3 sowie die Rückmeldung (Zehngang-Potentiometer 22). Aufgrund der austauschbaren Baueinheiten für die Untersetzung 4 bzw. das Getriebe 5 können jegliche Stellaufgaben bewältigt werden, wobei das einzusetzende Gehäuse 2 stets gleich bleibt. Bei der Auslegung des Antriebsmotors 3 kann der bei Stellaufgaben stets vorliegende Kurzzeitbetrieb berücksichtigt werden, so daß keine Dauerläufer erforderlich sind. Der Kurzzeitbetrieb ist mit geringem Verschleiß verbunden.

## Patentansprüche

1. In einem Gehäuse (2) aufgenommenen Stellantrieb, insbesondere für eine Druckmaschine, mit einem elektrischen Antriebsmotor (3), der über eine Untersetzung (4) mit einer Stellwelle (8) und über ein Getriebe (5) mit einem Stellungsmelder (7) verbunden ist,
**dadurch gekennzeichnet**,
daß die Untersetzung (4) und/oder das Getriebe (5) jeweils zwei parallel zueinander verlaufende Lagerachsen (53,54,58,74) aufweisen, auf die jeweils aus einem Ritzel (67,71) und einem mit diesem drehfest verbundenen Stirnrad (66,69) bestehende Untersetzungsräder (65,70) derart zur Vorgabe ihrer Anzahl und/oder ihres Durchmessers auswechselbar aufgesteckt sind, daß ein Ritzel (67) eines Untersetzungsrads (65) der einen Lagerachse in ein Stirnrad (66) eines Untersetzungsrads der anderen Lagerachse greift, dessen zugeordnetes Ritzel wiederum mit einem Stirnrad eines weiteren Untersetzungsrads kämmt, daß die Kopfwandung (30) des Gehäuses (2) eine Lagerung für die Stellwelle (8) aufweist, wobei ein auf dem innerhalb des Gehäuses gelegenen Stellwellenende befestigtes Zahnrad bei der Montage der Kopfwandung (30) direkt in Eingriff mit einem entsprechenden Ritzel eines Untersetzungsrades gelangt, daß die Lagerachsen (53,54,58,74) mit ihren einen Enden in Bohrungen (57,59) der Kopfwandung (30) und mit ihren anderen Enden in Bohrungen (52) einer Zwischenwand (43) des Gehäuses (2) eingreifen, daß die Zwischenwand (43) das Gehäuse (2) in zwei Räume (49,50) unterteilt und daß der eine, erste Raum (49) den Antriebsmotor (3) und den Stellungsmelder (7) und der andere, zweite Raum (50) die Untersetzung (4) und das Getriebe (5) aufnimmt.

2. Stellantrieb nach Anspruch 1,
**dadurch gekennzeichnet**,
daß die Zwischenwand (43) eine Montagewand (51) für den Antriebsmotor (3) und den Stellungsmelder (7) bildet.

3. Stellantrieb nach Anspruch 1 oder 2,
**dadurch gekennzeichnet**,
daß zwischen das Getriebe (5) und den Stellungsmelder (7) eine Rutschkupplung (6) geschaltet ist.

4. In einem Gehäuse (2) aufgenommenen Stellantrieb, insbesondere für eine Druckmaschine, mit einem elektrischen Antriebsmotor (3), der über eine Untersetzung (4) mit einer Stellwelle (8) und über ein Getriebe (5) mit einem Stellungsmelder (7) verbunden ist,
**dadurch gekennzeichnet**,
daß die Untersetzung (4) und/oder das Getriebe (5) jeweils zwei parallel zueinander verlaufende Lagerachsen (53,54,58,74) aufweisen, auf die jeweils aus einem Ritzel (67,71) und einem mit diesem drehfest verbundenen Stirnrad (66,69) bestehende Untersetzungsräder (65,70) derart zur Vorgabe ihrer Anzahl und/oder ihres Durchmessers auswechselbar aufgesteckt sind, daß ein Ritzel (67) eines Untersetzungsrads (65) der einen Lagerachse in ein Stirnrad (66) eines Untersetzungsrads der anderen Lagerachse greift, dessen zugeordnetes Ritzel wiederum mit einem Stirnrad eines weiteren Untersetzungsrades kämmt, daß die Kopfwandung (30) des Gehäuses (2) eine Lagerung für die Stellwelle (8) aufweist, wobei ein auf dem innerhalb des Gehäuses gelegenen Stellwellenende befestigtes Zahnrad bei der Montage der Kopfwandung (30) direkt in Eingriff mit einem entsprechenden Ritzel eines Untersetzungsrades gelangt, und daß der Antriebsmotor (3) an seinen beiden Stirnseiten (10,11) zwei zueinander entgegengesetzt verlaufende Abtriebswellenenden (12,13) aufweist, von denen das eine zu der in einem ersten Gehäuse-Innenraumbereich (14) vor der einen Stirnseite (10) gelegenen Untersetzung (4) führt und das andere über das Getriebe (5) mit einem Stellungsmelder (7) gekuppelt ist, wobei das Getriebe (5) in einem und der Stellungsmelder (7) in einem weiteren Gehäuse-Innenraumbereich (15) vor der anderen Stirnseite (11) des Antriebsmotors (3) angeordnet sind.

5. Stellantrieb nach Anspruch 4,
**dadurch gekennzeichnet**,
daß zwischen das Getriebe (5) und den Stellungsmelder (7) eine Rutschkupplung (6) geschaltet ist.

6. Stellantrieb nach Anspruch 5,
**dadurch gekennzeichnet**,
daß die Rutschkupplung (6) in dem weiteren Gehäuse-Innenraumbereich (15) angeordnet ist.

7. Stellantrieb nach einem oder mehreren der Ansprüche 4-6,
**dadurch gekennzeichnet**,
daß das Gehäuse (2) hohlzylindrisch ausgebildet ist und an einer Kopffläche (Kopfwandung 30) die Stellwelle (8) aufweist.

## Claims

1. Adjusting drive received in a housing (2), especially for a printing machine, with an electric drive motor (3) connected to an adjusting shaft (8) via a step-down (4) and to a position indicator (7) via a gear (5), characterized in that the step-down (4) and/or the gear (5) each have two mutually parallel bearing axles (53,54,58,74), on to which respective step-down wheels (65,70), each consisting of a pinion (67,71) and of a spur wheel (66,69) connected fixedly in terms of rotation to this, are so attached exchangeably for pre-setting their number and/or their diameter that a pinion (67) of a step-down wheel (65) of one bearing axle engages in a spur wheel (66) of a step-down wheel of the other bearing axle, whose associated pinion in turn meshes with a spur wheel of a further step-down wheel, that the head wall (30) of the housing (2) has a mounting for the adjusting shaft (8) a gearwheel secured on that end of the adjusting shaft which is situated within the housing entering directly into engagement with a corresponding pinion of a step-down wheel upon installation of the head wall (30), in that the bearing axles (53, 54, 58, 74) engage at one end into bores (57, 59) of the head wall (30) and at their other end into bores (52) of an intermediate wall (43) of the housing (2) that the intermediate wall (43) subdivides the housing (2) into two spaces (49,50), and in that one, first space (49) receives the drive motor (3) and the position indicator (7) and the other, second space (50) the step-down (4) and the gear (5).

2. Adjusting drive according to Claim 1, characterized in that the intermediate wall (43) constitutes an assembly wall (51) for the drive motor (3) and the position indicator (7).

3. Adjusting drive according to Claim 1 or 2, characterized in that a slipping clutch (6) is inserted between the gear (5) and the position indicator (7).

4. Adjusting drive received in a housing (2), especially for a printing machine, with an electric drive motor (3) connected to an adjusting shaft (8) via a step-down (4) and to a position indicator (7) via a gear (5), characterized in that the step-down (4) and/or the gear (5) each have two mutually parallel bearing axles (53,54,58,74), on to which respective step-down wheels (65,70), each consisting of a pinion (67,71) and of a spur wheel (66,69) connected fixedly in terms of rotation to this, are so attached exchangeably for pre-setting their number and/or their diameter that a pinion (67) of a step-down wheel (65) of one bearing axle engages in a spur wheel (66) of a step-down wheel of the other bearing axle, whose associated pinion in turn meshes with a spur wheel of a further step-down wheel, that the head wall (30) of the housing (2) has a mounting for the adjusting shaft (8) a gearwheel secured on that end of the adjusting shaft which is situated within the housing entering directly into engagement with a corresponding pinion of a step-down wheel upon installation of the head wall (30), that the drive motor (3) has on its two end faces (10,11) two output-shaft ends (12,13) which extend oppositely to one another and of which one leads to the step-down (4) located in front of one end face (10) in a first housing interior region (14) and the other is coupled to the position indicator (7) via the gear (5), the gear (5) being arranged in one, and the position indicator (7) being arranged in a further housing interior region (15) in front of the other end face (11) of the drive motor (3).

5. Adjusting drive according to Claim 4, charaterized in that a slipping clutch (6) is inserted between the gear (5) and the position indicator (7).

6. Adjusting drive according to Claim 5, characterized in that the slipping clutch (6) is arranged in the further housing interior region (15).

7. Adjusting drive according to one or more of Claims 4 - 6, characterized in that the housing (2) is made hollow-cylindrical and has the adjusting shaft (8) on a head surface (head wall 30).

## Revendications

1. Positionneur contenu dans un boîtier (2), en particulier pour une machine d'impression, comprenant un moteur électrique d'entraînement (3) relié par l'intermédiaire d'un démultiplicateur (4) à un arbre de positionnement (8) et par l'intermédiaire d'un engrenage (5) à un transmetteur de position (7), caractérisé en ce que le démultiplicateur (4) et/ou l'engrenage (5) présentent deux axes supports (53, 54, 58, 74) parallèles, sur lesquels des roues de réduction (65, 70), composées chacune d'un pignon (67, 71) et d'une roue droite (66, 69) solidarisée en rotation avec ce pignon, sont enfilées de façon interchangeable pour préfixer le nombre et/ou le diamètre des roues de réduction, de manière qu'un pignon (67) d'une roue de réduction (65) d'un axe support soit en prise avec une roue droite (66) d'une roue de réduction de l'autre axe support, roue de réduction dont le pignon engrène à son tour avec une roue droite d'une autre roue de réduction, que la paroi de tête (30) du boîtier (2) présente un palier pour l'arbre de positionnement (8), l'agencement étant tel que lors du montage de cette paroi de tête (30), une roue dentée fixée sur le bout d'arbre de positionnement situé à l'intérieur du boîtier, vient directement en prise avec un pignon correspondant d'une roue de réduction, que les axes supports (53, 54, 58, 74) pénètrent par leurs extrémités d'un côté dans des trous (57, 59) de la paroi de tête (30) et par leurs autres extrémités dans des trous (52) d'une paroi intermédiaire (43) du boîtier (2), que la paroi intermédiaire (43) partage le boîtier (2) en deux compartiments (49, 50) et qu'un premier compartiment (49) contient le moteur d'entraînement (3) et le transmetteur de position (7), tandis que le second compartiment (50) contient le démultiplicateur (4) et l'engrenage (5).

2. Positionneur selon la revendication 1, caractérisé en ce que la paroi intermédiaire (43) forme une paroi de montage (51) pour le moteur d'entraînement (3) et le transmetteur de position (7).

3. Positionneur selon la revendication 1 ou 2, caractérisé en ce qu'un accouplement à friction (6) est interposé entre l'engrenage (5) et le transmetteur de position (7).

4. Positionneur contenu dans un boîtier (2), en particulier pour une machine d'impression, comprenant un moteur électrique d'entraînement (3) relié par l'intermédiaire d'un démultiplicateur (4) à un arbre de positionnement (8) et par l'intermédiaire d'un engrenage (5) à un transmetteur de position (7), caractérisé en ce que le démultiplicateur (4) et/ou l'engrenage (5) présentent deux axes supports (53, 54, 58, 74) parallèles, sur lesquels des roues de réduction (65, 70), composées chacune d'un pignon (67, 71) et d'une roue droite (66, 69) solidarisée en rotation avec ce pignon, sont enfilées de façon interchangeable pour préfixer le nombre et/ou le diamètre des roues de réduction, de manière qu'un pignon (67) d'une roue de réduction (65) d'un axe support soit en prise avec une roue droite (66) d'une roue de réduction de l'autre axe support, roue de réduction dont le pignon engrène à son tour avec une roue droite d'une autre roue de réduction, que la paroi de tête (30) du boîtier (2) présente un palier pour l'arbre de positionnement (8), l'agencement étant tel que lors du montage de cette paroi de tête (30), une roue dentée fixée sur le bout d'arbre de positionnement situé à l'intérieur du boîtier, vient directement en prise avec un pignon correspondant d'une roue de réduction, et que le moteur d'entraînement (3) comporte, à ses deux côtés d'extrémité (10, 11), deux bouts d'arbre de sortie (12, 13) dirigés vers des côtés opposés, dont l'un mène au démultiplicateur (4), placé dans une première zone intérieure (14) du boîtier devant l'un des côtés d'extrémité (10), et l'autre est accouplé par l'intermédiaire de l'engrenage (5) à un transmetteur de position (7), l'engrenage (5) étant placé dans une zone intérieure et le transmetteur de position (7) étant placé dans une autre zone intérieure (15) du boîtier situées devant l'autre côté d'extrémité (11) du moteur d'entraînement (3).

5. Positionneur selon la revendication 4, caractérisé en ce qu'un accouplement à friction (6) est interposé entre l'engrenage (5) et le transmetteur de position (7).

6. Positionneur selon la revendication 5, caractérisé en ce que l'accouplement à friction (6) est installé dans l'autre zone intérieure (15) du boîtier.

7. Positionneur selon une ou plusieurs des revendications 4-6, caractérisé en ce que le boîtier (2) est en forme de cylindre creux et présente l'arbre de positionnement (8) à une face de tête (paroi de tête 30).
